# EUROPÄISCHE PATENTSCHRIFT

(11) **EP 1 561 408 B1**
(45) Veröffentlichungstag und Bekanntmachung des Hinweises auf die Patenterteilung: **25.03.2009**
(21) Anmeldenummer: 05100783.9
(22) Anmeldetag: 04.02.2005
(51) Int. Cl.: A47J 37/12

(54) **Frittiergerät**
Fryer
Friteuse

(30) Priorität: 05.02.2004 ES 200400348
(43) Veröffentlichungstag der Anmeldung: 10.08.2005
(73) Patentinhaber: BSH Bosch und Siemens Hausgeräte GmbH, 81739 München (DE)
(72) Erfinder: Klemm, Jochen, 31180 Zizur Mayor (ES); Ariznabarreta Garabieta, Joseba, 20800 Zarautz (ES)

(56) Entgegenhaltungen:
- EP-A- 0 587 300
- EP-A- 0 891 736
- DE-A1- 3 150 455
- US-B1- 6 334 888

## Beschreibung

Die Erfindung bezieht sich auf ein Frittiergerät der im Oberbegriff von Anspruch 1 erläuterten Art.

Ein derartiges Frittiergerät ist aus der DE-C-43 04 689 bekannt. Das bekannte Frittiergerät enthält ein Gehäuse, das das Frittierbad aufnimmt und das mit einem Deckel verschließbar ist. Im Inneren des Gehäuses ist ein Frittierkorb untergebracht, der die zu frittierenden Lebensmittel aufnimmt und aus dem Gehäuse herausgenommen werden kann. Um den Frittierkorb handhaben zu können, ist dieser mit einem Handgriff versehen, der beim Betrieb des Frittiergerätes aus dem Gehäuse vorsteht. Ein vom Gehäuse wegstehender Handgriff ist jedoch im Betrieb von Frittiergeräten aus Sicherheitsgründen nicht erwünscht und führt beim Aufbewahren des Frittiergerätes zu einem erhöhten Platzbedarf. Es wurde deshalb bereits versucht, den Handgriff in die unterschiedlichsten Verstaustellungen zu bringen. Bei dem gattungsgemäß berücksichtigten Frittiergerät befindet sich an der Außenseite des Gehäuses eine sich im Wesentlichen senkrecht erstreckende Nut, in die der Handgriff eingeklappt wird. Die Nut muss jedoch in einem vom Gehäuse vorstehenden Vorsprung untergebracht sein, um die notwendige Isolierdicke des Gefäßes nicht zu schmälern. Sowohl der Vorsprung als auch die Nut sind kompliziert herzustellen und schwierig zu reinigen.

Bei einem aus der DE-A-29 31 859 bekannten Frittiergerät wird der Handgriff um eine im Wesentlichen waagerechte Achse in eine Verstaustellung oberhalb des Deckels gekippt. Diese Verstaustellung ist jedoch nur geeignet, den Handgriff beim Wegräumen des Frittiergerätes zu verstauen. Würde der Handgriff während des Betriebs über den Deckel geschwenkt, so würde er sich durch den dort austretenden heißen Wrasen stark erhitzen. Im Betrieb muss somit der Handgriff vom Gerät vorstehend verbleiben, und kann Ursache von Unfällen sein, wenn der Benutzer unbeabsichtigt an den Handgriff stößt oder an ihm hängen bleibt.

Einen weiteren Handgriff, der um eine waagerechte Achse in eine senkrechte und parallel zum Gehäuse verlaufende Stellung verschwenkbar ist, zeigt das Frittiergerät nach der EP-B-162 482, wobei sich die gleichen Nachteile wie oben beschrieben ergeben.

Der Erfindung liegt somit die Aufgabe zugrunde, ein Frittiergerät mit einer verbesserten Anordnung des Handgriffs bereitzustellen.

Die Aufgabe wird durch die im Anspruch 1 angegebenen Merkmale gelöst.

Durch die erfindungsgemäße Ausgestaltung kann der Handgriff aus seiner vom Gehäuse vorstehenden Handhabungsstellung auf einfache Weise verstaut werden, so dass die Unfallgefahr stark reduziert wird. Der Handgriff kann die Verstaustellung sowohl bei Gebrauch des Frittiergerätes als auch dann einnehmen, wenn das Frittiergerät bei Nichtgebrauch weggeräumt wird. Bei der erfindungsgemäßen Lösung kann der glatte äußere Umfang des Gehäuses erhalten bleiben, so dass eine Reinigung stark erleichtert wird, wobei das glatte, durchgehende äußere Gehäuse auch nicht durch eine Reduzierung der Isolierstärke erkauft wird.

Vorteilhafte Weiterbildungen der Erfindung sind den Unteransprüchen zu entnehmen.

Bevorzugt liegt der Handgriff auf dem oberen Gehäuserand auf, wobei der Deckel an dieser Stelle mit der Ausnehmung bzw. Aussparung versehen ist, die den Handgriff aufnimmt. Eine Ausnehmung an dieser Stelle beeinträchtigt weder die erforderliche Isolationsdicke noch erschwert sie die Reinigung.

Die Bewegung des Handgriffs in seine Verstaustellung wird bevorzugt durch ein Verschwenken des Handgriffs um eine im Wesentlichen senkrechte Achse bewirkt. Dabei ist der Handgriff in der Verstaustellung parallel zu dem vorderen oberen Gehäuserand ausgerichtet.

Um ein unbeabsichtigtes Verschwenken des Handgriffs in der Handhabungsstellung zu vermeiden, kann der Handgriff mit Hilfe einer Arretierungsvorrichtung in der Handhabungsstellung fixiert sein, wobei die Arretierungsvorrichtung bevorzugt eine Klemmeinrichtung enthält.

Eine besonders einfache Konstruktion wird erreicht, wenn die im Wesentlichen senkrechte Achse, um die der Handgriff in die Verstaustellung verschwenkbar ist, in die Arretiereinrichtung integriert ist, was bevorzugt dadurch erreicht wird, dass die Arretiereinrichtung mit einem unrunden Zapfen zwischen zwei Gegenlagern aufgenommen wird, wobei wenigstens eines der Gegenlager federnd auslenkbar ist, so dass sich der Zapfen zwischen den Gegenlagern verdrehen kann und sich in der Handhabungsstellung zwischen den Gegenlagern verklemmt. Dabei sind bevorzugt beide Gegenlager als federnde Stangen ausgebildet.

Es ist weiterhin möglich, den Handgriff über eine weitere Schwenkachse mit dem Frittierkorb zu verbinden, so dass der Handgriff bei Nichtgebrauch des Frittiergerätes auch zur Gänze im Inneren des Frittiergerätes bzw. im Frittierkorb verstaut werden kann.

Von Vorteil ist es, wenn die Aussparung als ein zurückspringender Randabschnitt des Deckels ausgebildet ist. Dadurch ist eine platzsparende Anordnung des Handgriffs in dem Deckel ermöglicht. Bevorzugt kann der zurückspringende Randabschnitt des Deckels den oberen Rand des Gehäuses überlappen, wodurch eine ausreichende Abdichtung eines gehäuseinnenseitigen Garraums nach außen gewährleistet ist.

Vorteilig kann der Deckel mit einer Deckwand ausgebildet sein, die die Aussparung abdeckt. Hierdurch wird ein wirkungsvoller Schutz gegen die Verschmutzung des in der Aussparung angeordneten Handgriffes erreicht. In diesem Zusammenhang ist es besonders von Vorteil, wenn die Aussparung zwischen dem oberen Gehäuserand und der Deckwand als ein im Wesentlichen geschlossener Stauraum ausgebildet ist.

Ausführungsbeispiele der Erfindung werden nachfolgend anhand der Zeichnungen näher erläutert. Es zeigen:
- Fig. 1: ein erstes Ausführungsbeispiel eines erfindungsgemäßen Frittiergerätes mit einem Handgriff in Handhabungsstellung,
- Fig. 2: das Ausführungsbeispiel der Fig. 1 mit dem Handgriff in Verstaustellung,
- Fig. 3: das Ausführungsbeispiel nach Fig. 1 mit dem Handgriff in Verstaustellung bei geöffnetem Deckel,
- Fig. 4: eine Abbwandlung des Ausführungsbeispieles nach Fig. 1,
- Fig. 5: den Frittierkorb des Ausführungsbeispieles nach Fig. 4 mit dem Handgriff in Handhabungsstellung,
- Fig. 6: den Frittierkorb nach Fig. 5 in einer Aufbewahrungsstellung,
- Fig. 7: ein weiteres Ausführungsbeispiel eines erfindungsgemäßen Frittiergerätes mit dem Handgriff in Handhabungsstellung,
- Fig. 8: das Ausführungsbeispiel nach Fig. 7 mit dem Handgriff in Verstaustellung, und
- Fig. 9: das Ausführungsbeispiel nach Fig. 7 mit geschlossenem Deckel.

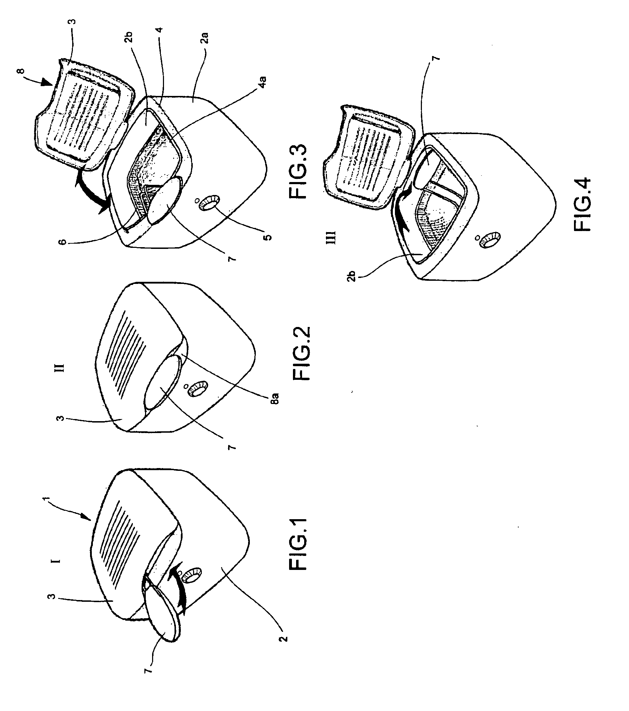

In den Fig. 1 bis 3 ist ein erstes Ausführungsbeispiel eines erfindungsgemäßen Frittiergerätes 1 in stark schematisierter Darstellung ersichtlich. Das Frittiergerät 1 enthält ein Gehäuse 2, das durch einen Deckel 3 verschließbar ist. Das Gehäuse 2 ist in üblicher Weise topfartig ausgebildet und enthält eine Außenschale 2a, einen Innentopf 2b, der das Frittierbad aufnimmt und eine nicht gezeichnete Isolierung zwischen den beiden Schalen 2a, 2b, die die übliche Stärke aufweist und somit für einen relativ breiten oberen Gehäuserand 4 sorgt, der durchaus einige Zentimeter breit sein kann. Bevorzugt ist der obere Gehäuserand 4 eben, waagerecht, liegt über seinen gesamten Umfang in der gleichen Ebene und ist nach innen durch eine Dichtleiste 4a begrenzt.

Das Frittiergerät 1 enthält weiterhin die üblichen Bedien- und Anzeigeelemente 5 und alle anderen konstruktiven Bauteile, wie beispielsweise eine Heizung und dgl., wie sie bei derartigen Frittiergeräten 1 üblich sind.

Im Inneren des Frittiergerätes 1 ist ein Frittierkorb 6 untergebracht, der mit Hilfe eines Handgriffes 7 aus dem Innentopf 2b herausgehoben und in diese hineingesenkt werden kann. Zu diesem Zweck steht der Handgriff 7, wie Fig. 1 zeigt, in einer Handhabungsstellung I im Wesentlichen senkrecht über die Außenschale 2a vor, so dass er von Hand leicht ergriffen werden kann.

Der Handgriff 7 kann relativ zum Frittierkorb 6 in die in Fig. 2 gezeigte Verstaustellung II verschwenkt werden. In der Verstaustellung II ist der Handgriff 7 im Wesentlichen parallel zum oberen Gehäuserand 4 ausgerichtet und liegt bevorzugt auf dem oberen Gehäuserand 4 auf. Der Deckel 3 weist an dieser Stelle eine Ausnehmung 8 auf, die sich durch die gesamte Dicke des Deckels 3 erstreckt, randseitig offen ist und an die Form des Handgriffes derart angepasst ist, dass der Handgriff 7 bei geschlossenem Deckel 3 sichtbar bleibt. Die Breite des Handgriffs 7 ist weiterhin so auf die Breite des Gehäuserandes 4 abgestimmt, dass der Deckel 3, auch im Bereich der Ausnehmung 8, ringsum auf der Dichtleiste 4a ruht. Die Ausnehmung 8 ist weiterhin bevorzugt so geformt, dass an derjenigen Stelle an der das freie Ende des Handgriffes 7 in der Verstaustellung II zu liegen kommt, ein Freiraum 8a verbleibt, so dass der Handgriff 7 über den Freiraum 8 ergriffen und bei geschlossenem Deckel 3 wieder in die Handhabungsstellung I verschwenkt werden kann.

In vorteilhafter Weiterbildung der Erfindung kann der Handgriff 7, wie Fig. 4 zeigt, um eine weitere Achse, im vorliegenden Ausführungsbeispiel eine horizontale Achse, als Ganzes in das Innere des Innentopfes 2b hineingeschwenkt werden, so dass er im Inneren des Frittiergerätes 1 verstaut werden kann, wenn das Frittiergerät 1 nicht in Betrieb ist.

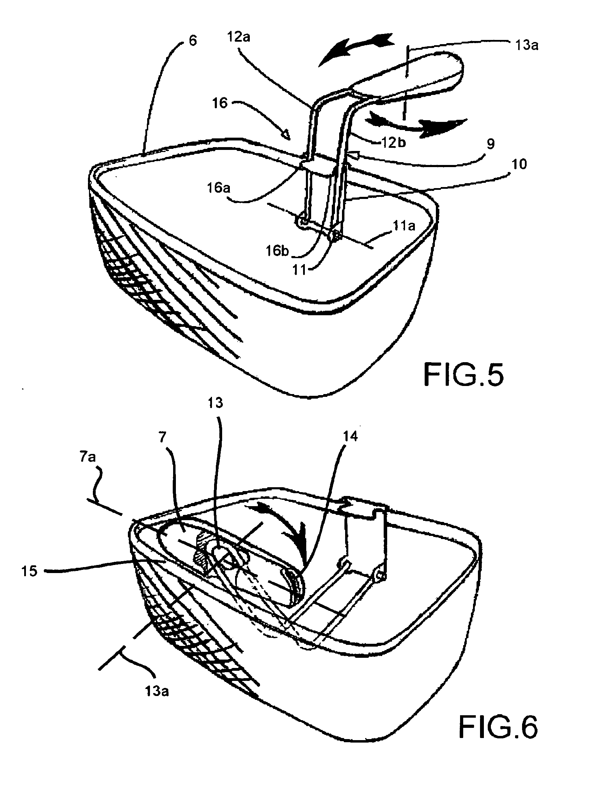

Der Frittierkorb 6 mit seinem Handgriff 7 in der erfindungsgemäßen Ausgestaltung werden nachfolgend anhand der Fig. 5 und 6 näher erläutert. Der Handgriff 7 ist mit Hilfe einer Halterung 9 am Frittierkorb 6 befestigt. Die Halterung 9 enthält ein Befestigungsblech 10, das etwa mittig an einer der Seiten des Frittierkorbes 6 befestigt ist. Am Befestigungsblech 10 ist in einem vertikalen Abstand zum oberen Rand des Frittierkorbes 6, der kleiner ist als die Breite des Frittierkorbes eine Lagerung 11 in Form zweier gegenüberliegender Lagerösen vorgesehen, in denen der Handgriff 7 um eine im Wesentlichen waagerechte Schwenkachse 11a verschwenkbar ist. Die Lagerung 11 nimmt zwei abgewinkelte, freie Enden zweier federnder Stangenteile 12a und 12b auf, die sich über das Befestigungsblech 10 und den Frittierkorb 6 nach oben erstrecken, oberhalb des oberen Gefäßrandes 4 im Wesentlichen rechtwinklig abgebogen sind und anschließend mit dem Handgriff 7 versehen sind. Bevorzugt sind die Stangenteile 12a, 12b Teil eines entsprechend gebogenen Drahtbügels aus Federdraht.

Die Befestigung der Stangenteile 12a, 12b am Handgriff 7 erfolgt derart, dass sich der Handgriff 7 entlang der in Fig. 5 gezeigten Pfeile um eine im Wesentlichen senkrechte, d.h. senkrecht zum oberen Gefäßrand 4 verlaufende Achse 13a im Wesentlichen in einer horizontalen Ebene verschwenken kann.

Die Achse 13a wird durch einen Zapfen 13 (Fig. 6) gebildet, der einen unrunden Querschnitt aufweist, der im dargestellten Ausführungsbeispiel tropfenförmig ist. Der Zapfen 13 ist im Inneren eines Schlitzes 14 im Handgriff 7 angeordnet, wobei der Schlitz 14 an der dem Frittierkorb 6 zugewandten Schmalseite und an der in die gewünschte Verschwenkrichtung weisenden Längsseite offen ist, während die übrigen Seiten des Schlitzes geschlossen sind. Insbesondere bilden die geschlossenen Bereiche des Schlitzes 14 im Bereich des Zapfens 13 eine Führung 15, die sich über wenigstens etwa einen Viertelkreis um die Achse 13a erstreckt, und verhindert, dass sich der Handgriff 7 relativ zur Halterung 9 linear verschiebt.

Die Stangenteile 12a, 12b sind in einer Schlaufe um den Zapfen 13 herumgelegt und bilden im Bereich des Zapfens 13 parallel zueinander verlaufende, federnd nachgiebige Gegenlager. Der tropfenförmige Querschnitt des Zapfens 13 ist im Schlitz 14 so ausgerichtet, dass seine breitere Abmessung sich quer zur Längsmittellinie 7a des Handgriffes 7 erstreckt, während die beiden Stangenteile 12a, 12b im Bereich des Zapfens 13 sich im Wesentlichen mit der kürzeren Abmessung des unrunden Querschnittes des Zapfens 13 gegenüberliegen. Ist somit die Längsmittellinie 7a des Handgriffes 7 im Wesentlichen parallel zu den Stangenteilen 12a, 12b ausgerichtet, steht somit der Handgriff 7 in seiner Handhabungsstellung I, dann drückt der breiter werdende Querschnitt des Zapfens 13 die Stangenteile 12a, 12b federnd auseinander. Die Federkraft der Stangenteile 12a, 12b klemmt somit den Zapfen 13 ein und bildet eine Arretiereinrichtung für den Handgriff 7 in der Handhabungsstellung I.

Soll der Handgriff 7 in die Verstaustellung II verschwenkt werden, so wird der Handgriff 7 um die Achse 13a aus seiner parallelen Stellung mit den Stangenteilen 12a, 12b verdreht, die Stangenteile 12a, 12b federn zurück, was mit einem hörbaren Klick verbunden ist, so dass der Benutzer die korrekte Funktion überwachen kann, und gestatten es nunmehr, dass der Handgriff 7 in eine parallel zum oberen Gehäuserand 4 verdrehte Stellung, die Verstaustellung II, gebracht wird.

Soll der Handgriff 7 in einer Aufbewahrungsstellung III vollständig im Inneren des Frittierkorbes 6 untergebracht werden, so wird der Handgriff 7 zunächst in die Verstaustellung II verdreht und anschließend mit den Stangenteilen 12a, 12b um die horizontale Achse 11a in das Innere des Frittierkorbes 6 hinein verschwenkt.

Um zu verhindern, dass sich der Handgriff 7 unbeabsichtigt um die horizontale Schwenkachse 11a verschwenkt, enthält die Halterung 9 eine Rasteinrichtung 16, die den Handgriff 7 in seinen außerhalb des Frittierkorbes 6 liegenden Stellungen I und II hält. Die Rasteinrichtung 16 weist Rastzungen 16a, 16b auf, die Rastausnehmungen für die Stangenteile 12a, 12b zum Inneren des Frittierkorbes 6 hin begrenzen. Die Rastzungen 16a, 16b weisen einen größeren Abstand zueinander auf, als die Stangenteile 12a, 12b in ihrem unbelasteten, entspannten Zustand, so dass die Stangenteile 12a, 12b federnd auseinandergespreizt werden müssen, wenn sie ihre in Fig. 5 gezeigte, senkrechte Stellung verlassen wollen. Dies erfordert einen bestimmten Kraftaufwand, so dass sichergestellt ist, dass sich der Handgriff 7 nicht unbeabsichtigt in das Innere des Frittierkorbes 6 hinein verschwenkt.

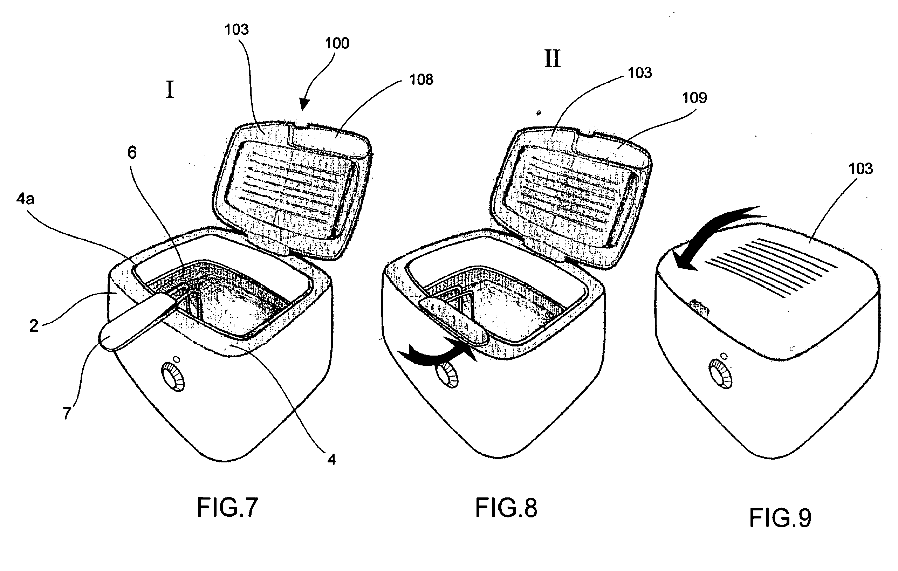

Die Fig. 7 bis 9 zeigen ein weiteres Ausführungsbeispiel eines erfindungsgemäß ausgebildeten Frittiergerätes 100, mit einem Gehäuse 2, einen Frittierkorb 6 und einem Handgriff 7 für den Frittierkorb 6, die dem Ausführungsbeispiel nach den Fig. 1 bis 3 entsprechen und nicht nochmals erläutert werden. Das Frittiergerät 100 unterscheidet sich vom Frittiergerät 1 durch einen abweichend ausgebildeten Deckel 103, der zwar wiederum mit einer Ausnehmung 108 versehen ist, die jedoch nur in der Unterseite des Deckels 103 vorgesehen ist. Die Ausnehmung ist etwa an die Größe und Form des Handgriffes 7 derart angepasst, dass der Handgriff 7 in seiner in Fig. 8 gezeigten Verstaustellung II von außen nicht mehr sichtbar ist, wenn der Deckel 103 geschlossen ist, wie dies in Fig. 9 dargestellt ist.

In allen Ausführungsbeispielen kann der in den Fig. 5 und 6 dargestellte Frittierkorb mit der Verschwenkmöglichkeit um die horizontale Achse 11a zusätzlich zur Verschwenkmöglichkeit um die vertikale Achse 13a eingesetzt werden. Es ist jedoch auch möglich, einen Frittierkorb einzusetzen, dessen Handgriff nur die Verschwenkmöglichkeit um die vertikale Achse 13a zeigt. Der Handgriff kann gegebenenfalls auch in einer Aussparung im oberen Gehäuserand oder in einer in Deckel und Rand vorgesehenen Aussparung untergebracht werden. Unter Umständen kann der Handgriff statt um eine Achse verschwenkt zu werden, auch abgenommen und auf den oberen Gehäuserand aufgelegt werden. Die Erfindung ist ebenfalls einsetzbar bei Frittierkörben, deren Handgriff zweigeteilt ist, wobei ein Teil des Handgriffs verschwenkbar und der andere Teil des Handgriffs demgegenüber feststeht. Die Arretiervorrichtung kann durch jede bekannte Klemm-, Rast- oder Schnappverbindung gebildet werden. Bei der dargestellten Arretiereinrichtung können die Gegenlager auch durch elastisch federnde Wände oder dgl. gebildet werden. Auch die Befestigung des Handgriffes am Frittierkorb kann auf jede bekannte Weise gelöst werden.

## Patentansprüche

1. Frittiergerät (1, 100) mit einem nach oben offenen Gehäuse (2), einem Deckel (3, 103) zum Abdecken des Gehäuses (2), einem im Gehäuse (2) aufgenommenen Frittierkorb (6) und einem am Frittierkorb (6) angeordneten, in einer Handhabungsstellung (I) vom Gehäuse (2) vorstehenden und in eine Verstaustellung (II) bringbaren Handgriff (7), **dadurch gekennzeichnet, dass** der Handgriff (7) in der Verstaustellung (II) parallel zum vorderen oberen Gehäuserand (4) ausgerichtet ist und in einer Aussparung (8, 108) des Deckels (3, 103) angeordnet ist.

2. Frittiergerät nach Anspruch 1, **dadurch gekennzeichnet, dass** die Aussparung (8, 108) als ein zurückspringender Randabschnitt des Deckels (3, 103) ausgebildet ist.

3. Frittiergerät nach Anspruch 2, **dadurch gekennzeichnet, dass** der zurückspringende Randabschnitt des Deckels (3, 103) einen oberen Rand (4) des Gehäuses überlappt.

4. Frittiergerät nach einem der vorhergehenden Ansprüche, **dadurch gekennzeichnet, dass** der Deckel mit einer Deckwand (109) ausgebildet ist, die die Aussparung (108) abdeckt.

5. Frittiergerät nach Anspruch 3 oder 4, **dadurch gekennzeichnet, dass** die Aussparung (108) zwischen dem oberen Gehäuserand (4) und der Deckwand (109) als ein im Wesentlichen geschlossener Stauraum ausgebildet ist.

6. Frittiergerät nach einem der vorhergehenden Ansprüche, **dadurch gekennzeichnet, dass** der Handgriff (7) in der Verstaustellung (II) auf dem oberen Gehäuserand (4) aufliegt.

7. Frittiergerät nach einem, der vorhergehenden Ansprüche, **dadurch gekennzeichnet, dass** der Handgriff (7) um eine im Wesentlichen senkrechte Achse (13a) verschwenkbar ist.

8. Frittiergerät nach einem der vorhergehenden Ansprüche, **dadurch gekennzeichnet, dass** der Handgriff (7) über ein Halteteil (9) mit dem Frittierkorb (6) verbunden ist.

9. Frittiergerät nach Anspruch 8, **dadurch gekennzeichnet, dass** der Handgriff (7) zwischen der Verstaustellung (II) und der Handhabungsstellung (I) bewegbar an dem Halteteil (9) gehaltert ist.

10. Frittiergerät nach Anspruch 9, **dadurch gekennzeichnet, dass** der Handgriff in der Handhabungsstellung (I) an dem Halteteil (9) mit Hilfe einer Arretierungsvorrichtung (12a, 12b,13) fixierbar ist.

11. Frittiergerät nach Anspruch 10, **dadurch gekennzeichnet, dass** die Arretierungsvorrichtung (12a, 12b, 13) eine Klemmeinrichtung enthält.

12. Frittiergerät nach einem der Ansprüche 10 oder 11, **dadurch gekennzeichnet, dass** die Achse (13a) in die Arretiereinrichtung (12a, 12b, 13) integriert ist.

13. Frittiergerät nach einem der Ansprüche 10 bis 12, **dadurch gekennzeichnet, dass** die Arretierungsvorrichtung einen Zapfen (13) mit unrundem Querschnitt enthält, der relativ verdrehbar zwischen Gegenlagern (12a, 12b) aufgenommen ist, wobei wenigstens ein Gegenlager federnd auslenkbar ist.

14. Frittiergerät nach Anspruch 13, **dadurch gekennzeichnet, dass** das Halteteil (9) als Gegenlager zwei parallele, federnd ausgebildete Stangenteile (12a, 12b) aufweist.

15. Frittiergerät nach einem der vorhergehenden Ansprüche, **dadurch gekennzeichnet, dass** der Handgriff (7) über eine weitere Schwenkachse (11a) mit dem Frittierkorb (6) verbunden ist.

16. Frittiergerät nach einem der vorhergehenden Ansprüche, **dadurch gekennzeichnet, dass** die Achse (13a) als ein Zapfen (13) zwischen den Stangenteilen (12a, 12b) derart drehbar aufgenommen ist, dass sich sein unrunder Querschnitt in der Handhabungsstellung (I) zwischen den Stangenteilen (12a, 12b) verklemmt.

## Claims

1. Fryer (1, 100) with a upwardly open housing (2), a lid (3, 103) for covering the housing (2), a frying basket (6) accommodated in the housing (2) and a handle (7) which is arranged at the frying basket (6) and protrudes from the housing (2) in a handling setting (I) and can brought into a stowage setting (II), **characterised in that** the handle (7) in the stowage setting (II) is oriented parallel to the front, upper housing edge (4) and is arranged in a cut-out (8, 108) of the lid (3, 103).

2. Fryer according to claim 1, **characterised in that** the cut-out (8, 108) is formed as a recessed edge section of the lid (3, 103).

3. Fryer according to claim 2, **characterised in that** the recessed edge section of the lid (3, 103) overlaps an upper edge (4) of the housing.

4. Fryer according to any one of the preceding claims, **characterised in that** the lid is constructed with a cover wall (109) which covers the cut-out (108).

5. Fryer according to claim 3 or 4, **characterised in that** the cut-out (108) is formed between the upper housing edge (4) and the cover wall (109) as a substantially closed stowage space.

6. Fryer according to any one of the preceding claims, **characterised in that** the handle (7) in the stowage setting (II) rests on the upper housing edge (4).

7. Fryer according to any one of the preceding claims, **characterised in that** the handle (7) is pivotable about a substantially perpendicular axis (13a).

8. Fryer according to any one of the preceding claims, **characterised in that** the handle (7) is connected with the fryer basket (6) by way of a holding part (9).

9. Fryer according to claim 8, **characterised in that** the handle (7) is mounted on the holding part (9) to be movable between the stowage setting (II) and the handling setting (I).

10. Fryer according to claim 9, **characterised in that** the handle in the handling setting (I) is fixable to the holding part (9) with the help of a locking device (12a, 12b, 13).

11. Fryer according to claim 10, **characterised in that** the locking device (12a, 12b, 13) includes a clamping device.

12. Fryer according to one of claims 10 and 11, **characterised in that** the axis (13a) is integrated in the locking device (12a, 12b, 13).

13. Fryer according to any one of claims 10 to 12, **characterised in that** the locking device includes a pin (13) with non-round cross-section, which is received to be relatively rotatable between counter-bearings (12a, 12b) wherein at least one counter-bearing is resiliently deflectable.

14. Fryer according to claim 13, **characterised in that** the holding part (9) has, as counter-bearing, two parallel, resiliently constructed rod parts (12a, 12b).

15. Fryer according to any one of the preceding claims, **characterised in that** the handle (7) is connected with the fryer basket (6) by way of a further pivot axis (11 a).

16. Fryer according to any one of the preceding claims, **characterised in that** the axis (13a) as a pin (13) is received between the rod parts (12a, 12b) to be rotatable in such a manner that its non-round cross-section is clamped in the handling setting (I) between the rod parts (12, 12b).

## Revendications

1. Friteuse (1, 100) avec une cuve (2) ouverte vers le haut, un couvercle (3, 103) pour recouvrir la cuve (2), un panier à frire (6) incorporé à la cuve (2) et une poignée (7) agencée au panier à frire (6), saillante de la cuve (2) dans une position de manipulation (I) et déplaçable dans une position de rangement (II), **caractérisée en ce que**, en position de rangement (II), la poignée (7) est disposée parallèlement au bord supérieur avant de la cuve (4) et est agencée dans un évidement (8, 108) du couvercle (3, 103).

2. Friteuse selon la revendication 1, **caractérisée en ce que** l'évidement (8, 108) est réalisé sous la forme d'une partie de bord rentrante du couvercle (3, 103).

3. Friteuse selon la revendication 2, **caractérisée en ce que** la partie de bord rentrante du couvercle (3, 103) chevauche un bord supérieur (4) de la cuve.

4. Friteuse selon l'une des revendications précédentes, **caractérisée en ce que** le couvercle est exécuté avec une paroi supérieure (109) qui recouvre l'évidement (108).

5. Friteuse selon la revendication 3 ou 4, **caractérisée en ce que** l'évidement (108) est exécuté entre le bord supérieur de la cuve (4) et la paroi supérieure (109) sous la forme d'un espace de rangement essentiellement fermé.

6. Friteuse selon l'une des revendications précédentes, **caractérisée en ce que** la poignée (7) repose sur le bord supérieur de la cuve (4) en position de rangement (II).

7. Friteuse selon l'une des revendications précédentes, **caractérisée en ce que** la poignée (7) est orientable par rapport à un axe essentiellement vertical (13a).

8. Friteuse selon l'une des revendications précédentes, **caractérisée en ce que** la poignée (7) est reliée au panier à frire (6) via un élément de retenue (9).

9. Friteuse selon la revendication 8, **caractérisée en ce que** la poignée (7) est fixée à l'élément de retenue (9) de manière déplaçable entre la position de rangement (II) et la position de manipulation (I).

10. Friteuse selon la revendication 9, **caractérisée en ce que**, en position de manipulation (I), la poignée peut être fixée à l'élément de retenue (9) à l'aide d'un dispositif d'arrêt (12a, 12b, 13).

11. Friteuse selon la revendication 10, **caractérisée en ce que** le dispositif d'arrêt (12a, 12b, 13) contient un dispositif de blocage.

12. Friteuse selon l'une des revendications 10 ou 11, **caractérisée en ce que** l'axe (13a) est intégré au dispositif d'arrêt (12a, 12b, 13).

13. Friteuse selon l'une des revendications 10 à 12, **caractérisée en ce que** le dispositif d'arrêt comporte un pivot (13) de section irrégulière, intégré de façon relativement souple entre des butées (12a, 12b), au moins une butée pouvant être déplacée élastiquement.

14. Friteuse selon la revendication 13, **caractérisée en ce que** l'élément de retenue (9) présente des butées sous la forme de deux éléments cauliformes (12a, 12b) parallèles, exécutés élastiquement.

15. Friteuse selon l'une des revendications précédentes, **caractérisée en ce que** la poignée (7) est reliée au panier à frire (6) via un axe de pivotement supplémentaire (11a).

16. Friteuse selon l'une des revendications précédentes, **caractérisée en ce que** l'axe (13a) est intégré de façon souple sous forme de pivot (13) entre les éléments cauliformes (12a, 12b) de telle manière que sa section irrégulière se coince entre les éléments cauliformes (12a, 12b) en position de manipulation (I).
